# EUROPEAN PATENT APPLICATION

(11) **EP 4 273 759 A1**
(43) Date of publication of application: **08.11.2023**
(21) Application number: 22175086.2
(22) Date of filing: 24.05.2022
(51) Int. Cl.: G06N 10/60, G06N 5/00, G06N 20/00

(54) **A COMPUTER IMPLEMENTED METHOD FOR PERFORMING AN APPROXIMATE OPTIMIZATION FOR SOLVING A GLOBAL OPTIMIZATION TASK**

(30) Priority: 05.05.2022 IN 202241026178
(71) Applicant: Infosys Limited, 560-100 Bangalore (IN)
(72) Inventor: QUDSI, Mohammed Aamir, 562114 Bengaluru Rural (IN); VARADHARAJAN, Vijayaraghavan, 636201 Salem (IN); PACHBUDHE, Akshay, 440022 Pratap Nagar (IN)
(74) Representative: Savi, Massimiliano

(57) **Abstract**

A method and system for performing an approximate optimization for solving a global optimization task, comprising of receiving data representing one or more global task objectives performing an optimization technique to cause transition of the global optimization task from a first Hamiltonian state towards a second Hamiltonian state identifying, through a machine learning model, an equation/algorithm to obtain a solution to the global optimization task in the quantum domain, wherein the identification is based on clustering equation/algorithm trained with predefined types of decision variables.

## Description

### FIELD OF INVENTION

The present disclosure relates to method and system for performing an approximate optimization for solving a global optimization task.

### BACKGROUND

Quantum computing has promising future in solving combinatorial optimization problems. But as it is in the initial stages and quantum computing hardware needs improvements, and there are multiple quantum computing hardware's that are available, so a solution for a problem should be such that it adapts to the corresponding hardware specifications.

When a problem is defined, a research scientist must start working on defining the objectives of the problem and constraints that needs to be satisfied while optimizing the objective of the problem. After defining the problem this needs to be sent to a developer to build the model for respective quantum hardware and find the optimal values of weights/penalties best suited for the respective hardware. This is a time intensive work and also doesn't adhere to any standard method or process for model building. Hence every other developer will attend to the same query differently and have a distinctly different model being created.

The method and system described herein help research scientist to select the best model that fits the problem requirements and corresponding hardware and their respective optimal values of weights/penalties. Adding to this it automates the implementation process, where scientist can build and test multiple variations without developer requirement.

To the best of contemporary knowledge, no solution attempts this kind of approach for quantum requirements. There are a few opensource API's which are used to solve optimization problems using classical computer such as Cplex, Gurobi etc., to give the opensource information there are multiple solution approaches which are used for different quantum hardware(s) such as Variational quantum eigen solver, Quantum Approximate optimization algorithm, NumPy eigen solver etc.

### SUMMARY

Systems and methods disclosed herein relate to quantum information processing. The computational capability of a quantum computer is much more powerful than conventional digital computers. More specifically to related to enhanced hybrid quantum-classical computing mechanism for solving optimization problems.

A method and system for performing an approximate optimization for solving a global optimization task, comprising of receiving data representing one or more global task objectives performing an optimization technique to cause transition of the global optimization task from a first Hamiltonian state towards a second Hamiltonian state identifying, through a machine learning model, an equation/algorithm to obtain a solution to the global optimization task in the quantum domain, wherein the identification is based on clustering equation/algorithm trained with predefined types of decision variables.

The global optimization task is based on a combinatorial optimization problem. It is also to be noted that the transition of the global optimization task from a first Hamiltonian state towards a second Hamiltonian state is performed by transforming the quantum processor from an initial state to a final state based on the computed model Hamiltonian and a selected set of variational parameters. The method and system are also aimed at solving the optimization task wherein the set of variational parameters is selected by the classical computer based on nearest neighbors be used to find the best fit suggestion for the given equations. The variational parameters are optimized to evaluate the solution using specified algorithm on respective hardware using optimization techniques like deferential optimization. A clustering algorithm is trained with a predefined set of decision variables from the equations to suggest algorithms to solve problems with different decision variables.

An optimization to cause transition of the global optimization task from a first Hamiltonian state towards a second Hamiltonian state is performed by identifying, through a machine learning model, an equation/algorithm to obtain a solution to the global optimization task in the quantum domain, wherein the identification is based on clustering algorithm trained with predefined types of decision variables. These decision variables are various parameters including, but not limited to risk percentage, amount of money to be invested, the list of stocks. This optimization task is based on a combinatorial optimization problem. The transition of the global optimization task from a first Hamiltonian state towards a second Hamiltonian state is performed by transforming the quantum processor from an initial state to a final state based on the computed model Hamiltonian and a selected set of variational parameters. The set of variational parameters is selected by the classical computer based on nearest neighbors be used to find the best fit suggestion for the given equations. A clustering algorithm is trained with a predefined set of decision variables from the equations to suggest algorithms to solve problems with different decision variables.

### BRIEF DESCRIPTION OF DRAWINGS

The embodiments of this invention are illustrated by way of example and not limitation in the figures of the accompanying drawings, in which like references indicate similar elements and in which:
Figure 1 depicts an example quantum optimization system for solving global optimization tasks.
Figure 2 describes the functioning flow of the solution of a global optimization problem based on the constrains and parameters

### DETAILED DESCRIPTION

The invention may be implemented in numerous ways, including as a system, a process, an apparatus, or as computer program instructions included on a computer readable medium such as a computer readable storage medium or a computer network wherein program instructions are sent over optical or electronic communication links.

A detailed description of one or more examples is provided below along with accompanying figures. The detailed description is provided in connection with such examples but is not limited to any particular embodiment. The scope is limited only by the claims and numerous alternatives, modifications, and equivalents are encompassed. Numerous specific details are set forth in the following description in order to provide a thorough understanding. These details are provided for the purpose of example and the described embodiments may be implemented according to the claims without some or all of these specific details. For the purpose of clarity, technical material that is known in the technical fields related to the embodiments has not been described in detail to avoid unnecessarily obscuring the description.

The embodiments described herein provide methods and systems for performing an approximate optimization for solving a global optimization task, comprising of receiving data representing one or more global task objectives performing an optimization technique to cause transition of the global optimization task from a first Hamiltonian state towards a second Hamiltonian state identifying, through a machine learning model, an equation/algorithm to obtain a solution to the global optimization task in the quantum domain, wherein the identification is based on clustering equation/algorithm trained with predefined types of decision variables.

Optimization is a class of problem which is imperative to every industry be from Information Technology to Financing. So, optimization can be applied to every event where there is maximization or minimization of resources or utilities.

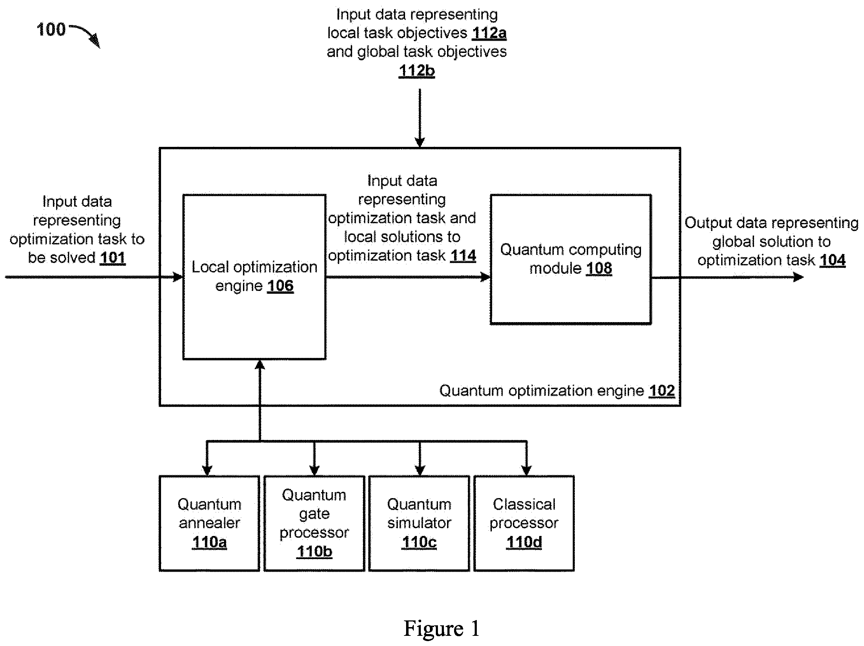

FIG. 1 depicts a widely available quantum optimization system 100 for solving global optimization tasks. The quantum optimization system 100 is an example of a system implemented as computer programs on one or more classical or quantum computing devices in one or more locations, in which the systems, components, and techniques described below can be implemented.

The quantum optimization system 100 includes a quantum optimization engine 102 and one or more additional computing resources 110 a-110 d, e.g., quantum annealer 110 a, quantum gate processor 110 b, quantum simulator 110 c and classical processor 110 d. For convenience, four additional computing resources 110a - 110 d are shown in Figure 1, however in some implementations the quantum optimization system 100 may include more or fewer additional computing resources. The quantum optimization engine 102 is in data communication with each of the additional computing resources 110a - 110d , e.g., through a communication network such as over an internet or intranet network link

The quantum optimization engine 102 is configured to receive as input data representing an optimization task to be solved, e.g., input data 101, and input data representing task objectives for the optimization task to be solved, e.g., input data 112 a and 112 b. The quantum optimization engine 102 is configured to process the received data inputs 101, 112 a and 112 b to generate as output data representing a global solution to the optimization task to be solved, e.g., output data 104.

The optimization task to be solved may be a task of finding a best solution to a problem from a set of feasible solutions. For example, the optimization task may be of forming stacks of containers standing on top of each other in the stacks in assigned cells at a container storage facility.

The input data 101 may be in multiple formats ranging from equations and variable and constraints defied mathematically. Data may be in matrix from or database table with specified structure. Data may be a language input define constraints and objective of the problem Data may be a mix of equations, variables, matrices, database tables, language input. The quantum optimization engine 102 includes a local optimization engine 106 and a quantum computing module 108. The local optimization engine 106 is configured to receive as input data for an optimization task to be solved, e.g., input data 101, and input data representing local task objectives, e.g., input data 112 a. The local optimization engine 106 is configured to process the received data to generate as output data representing one or more local solutions to the optimization task

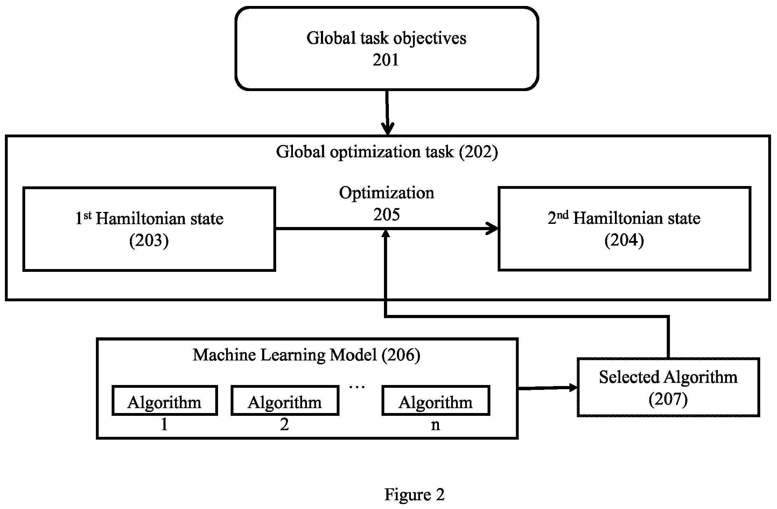

Figure 2 describes the functioning flow of the solution of a global optimization problem based on the constrains and parameters. A Natural language processing (NLP) based model is used to extract the information about objective, constraints, and variables from the input data. With these and if data is provided a machine learning (ML) model is used to recalibrate the equations and redefining the objectives with respect to data. When the equations are given, consistency of the equations is checked. The current disclosure provides for a method to choose the best algorithm that can be used to solve the defined problem using the selected problem the method takes an input from the model selection like equations constraints variables and use these equations to select the most appropriate algorithm to solve the problems using a clustering algorithm like k-means. Based on the type of algorithm selected a classification model is used to get the best quantum device that can be used to run the given problem with specified algorithm using the characteristics like the type of the decision variables used, the type of classical optimizer used and the type of constraints.

Optimization tasks may be formulated as a task of empirically adjusting an objective function of variables with respect to the variables, i.e., finding a set of values of the variables that empirically adjust the objective function.

Based on input data provided the user data is taken and converted into input for model selection. The Data may be in form of equations and variable and constraints defied mathematically. Data may also be in matrix from or database table with specified structure. Data may also be in the form of a language input defining constraints and objective of the problem. Data may be a mix of equations, variables, matrices, database tables, language input. An NLP based model is used to extract the information about objective, constraints, and variables. With these and if data is provided a ML model is used to recalibrate the equations and redefining the objectives with respect to data. If the equations are given checking the consistency of the equations. This data is provided as input feed to a model selector

The data from the data provider which can be used to find the best fitting model to fit the equations that are defined with a preexisting model which can help user with constraints and other information which a user might have missed to be added. This eliminates the chances of human error and any occurrence of omission of data input.

The input for the model are the equations and variable provided by the data provider. The model selector evaluates the given equations, constraints and variables, based on the inputs , using a machine learning model for clustering and selects the best fit for the given information from the user. The model selected provides the completeness for the problem that is defined by the user

An input from the model selection is taken. The input may be one or more of the list of equations and constraints variables. This input may be used to select the most appropriate algorithm to solve the problems using a clustering algorithm like k-means algorithm. This is used to select the best algorithm that may be used to solve the defined problem using the selected problem. Based on the type of algorithm selected, a classification model is used to identify the best quantum device that can be used to solve the given problem with specified algorithm. This may be done using the characteristics like the type of the decision variables used, the type of classical optimizer used and the type of constraints.

Based on user selection of algorithms the model gets evaluated and corresponding optimal weights/penalties for each of the algorithms are found using classical optimization techniques and the corresponding performance characteristics like time of execution, cost of execution etc. are calculated.

In order to efficiently convert the problems into solvable problem on multiple hardware using the specified algorithm, conversion of problem into quantum solvable problem is needed. This is performed by the using a constraint satisfying parameter(s). The hardware tunable parameters can be amongst, but not limited to, a qubit mapping graph (how efficiently a problem be mapped onto quantum hardware), qubit swapping (which qubits to swap for efficient computation) amongst others. The constraint satisfiable parameters are to be optimized to produce efficient results. Mapping the problems is performed by identifying of the working of specified algorithm with which the mapping to a specific hardware may be performed. Each hardware has a different mapping condition specified by the hardware provider. Efficient conversion of the problem to specification of the hardware is performed using a mapper.

The mapper is configured to take the problem information and the hardware instructions to generate the instruction set followed to execute the given problem on the specified hardware using the selected algorithm. The mapper also stores information about the hardware parameters that are customized by the user.

Optimization of the problem is performed through optimization of the penalty parameters using an approach of differential optimization technique for error with dynamic data generation using a data generator. The problem to be solved using the specified algorithm on a given hardware is optimized based on of penalty parameters for each hardware.

The problem is evaluated to satisfy the required precondition of hardware and algorithm that is used to solve the problem. If the problem does not satisfy the preconditions and hardware criteria, then it is sent for reformulation. If it satisfies the precondition the dynamic data generator is initiated to get a data dataset for the given problem

The data generator takes the input about the problem definitions, variables information and initial data, if provided. This information is used by GAN's to a create diverse dataset. A set of corresponding solutions are generated using a classical solver. A complete dataset is compiled using different inputs for the problem and corresponding outputs.

The penalty value is optimized specific to the selected algorithm and corresponding hardware. Information about the hardware, algorithm and number of penalty terms that needs to be optimized are taken as input for the penalty value optimization. An error based differential technique is used to optimize the penalty parameters. The optimization is performed iteratively until a predefined threshold of error is achieved.

A ranking of the algorithm is generated by a predefined set of performance parameters. This is aimed at determining and suggest the best algorithm and hardware combination which can be used by the user to solve problems. The suggestion is based on the ranking generated by different performance parameters. Performance parameters may be one or more of, but not limited to, error, time to setup the algorithm on hardware, time of execution of the algorithm, the cumulative error correction that was done by the hardware to solve that problem. The highest performing algorithm and device/hardware combinations are suggested as the best combination. In order to achieve a better accuracy, the algorithms that are unable to run the given problem, such algorithms may be marked and presented to the user on a user interface for corrections.

In an exemplifying scenario, an investment portfolio optimization problem may be taken up for suggestion. Portfolio optimization is a highly complex procedure with multiple variables. The reduced portfolio optimization problem in this example has the amount of variation in the stock price as a parameter. The variation provides an input on the highest and lowest prices of the stock. A user may select a predetermined threshold of the risk that he may want to take. In a scenario where the risk threshold factored by the user is 50%, the chance of losing or gaining more than 50% of the invested amount is very less.

This problem can be formulated as the example shown where we consider budget, risk, variation in the stock price, and the stock pool that a user would like to optimize.

In the above case, the program takes a formulated problem optimization problem with all its constraints on how much risk the user would be taking. The algorithm selection is also based on the amount of money to be invested, the list of stocks. Hence risk percentage, invested amounted the stock list are the input parameters. The problem in this scenario is identified as price variations of the input parameters. The conversion of the problem into a quantum solvable problem by Hamiltonian conversion procedure is to be performed where penalty variables are added. These penalty variables are quantum computing hardware-specific and currently, they are determined by trial-and-error methods. an optimization approach to determine the best penalty values for the combination of the problem and the hardware by following the procedural steps. The scalability and quality of the solution obtained are also factored in and analyzed dynamically on multiple quantum hardware with different algorithms and raking based suggestions are provided.

**An** approximate optimization for solving a global optimization task (202) Is performed be receiving the data representing one or more global task objectives (201). In the above scenario the objective is to solve an investment portfolio optimization. An optimization to cause transition of the global optimization task from a first Hamiltonian state (203) towards a second Hamiltonian state (204) is performed by identifying, through a machine learning model (206), an equation/algorithm to obtain a solution to the global optimization task in the quantum domain, wherein the identification is based on clustering algorithm trained with predefined types of decision variables. These decision variables are various parameters including, but not limited to risk percentage, amount of money to be invested, the list of stocks. This optimization task (205) is based on a combinatorial optimization problem. The transition of the global optimization task from a first Hamiltonian state towards a second Hamiltonian state is performed by transforming the quantum processor from an initial state to a final state based on the computed model Hamiltonian and a selected set of variational parameters. The penalty value is optimized specific to the selected algorithm (207) and corresponding hardware. The set of variational parameters is selected by the classical computer based on nearest neighbors be used to find the best fit suggestion for the given equations. The variational parameters are optimized to evaluate the solution using specified algorithm on respective hardware using optimization techniques like deferential optimization. The variational parameters are optimized to evaluate the solution using specified algorithm on respective hardware using optimization techniques like deferential optimization. A clustering algorithm is trained with a predefined set of decision variables from the equations to suggest algorithms to solve problems with different decision variables.

Although the present embodiments have been described with reference to specific example embodiments, it will be evident that various modifications and changes may be made to these embodiments without departing from the broader spirit and scope of the various embodiments. For example, the various devices and modules described herein may be enabled and operated using hardware circuitry, firmware, software or any combination of hardware, firmware, and software (e.g., embodied in a machine readable medium).

In addition, it will be appreciated that the various operations, processes, and methods disclosed herein may be embodied in a machine-readable medium and/or a machine accessible medium compatible with a data processing system (e.g., a computer devices), and may be performed in any order (e.g., including using means for achieving the various operations). The medium may be, for example, a memory, a transportable medium such as a CD, a DVD, or a portable memory device. A computer program embodying the aspects of the exemplary embodiments may be loaded onto the retail portal. The computer program is not limited to specific embodiments discussed above, and may, for example, be implemented in an operating system, an application program, a foreground or background process, a driver, a network stack or any combination thereof. The computer program may be executed on a single computer processor or multiple computer processors.

Moreover, as disclosed herein, the term "computer-readable medium" includes, but is not limited to portable or fixed storage devices, optical storage devices and various other mediums capable of storing or containing data.

Accordingly, the specification and drawings are to be regarded in an illustrative rather than a restrictive sense.

Terms and phrases used in this document, and variations thereof, unless otherwise expressly stated, should be construed as open ended as opposed to limiting. As examples of the foregoing: the term "including" should be read as meaning "including, without limitation" or the like; the term "example" is used to provide exemplary instances of the item in discussion, not an exhaustive or limiting list thereof; the terms "a" or "an" should be read as meaning "at least one," "one or more" or the like; and adjectives such as "conventional," "traditional," "normal," "standard," "known" and terms of similar meaning should not be construed as limiting the item described to a given time period or to an item available as of a given time, but instead should be read to encompass conventional, traditional, normal, or standard technologies that may be available or known now or at any time in the future. Likewise, where this document refers to technologies that would be apparent or known to one of ordinary skill in the art, such technologies encompass those apparent or known to the skilled artisan now or at any time in the future.

A group of items linked with the conjunction "and" should not be read as requiring that each and every one of those items be present in the grouping, but rather should be read as "and/or" unless expressly stated otherwise. Similarly, a group of items linked with the conjunction "or" should not be read as requiring mutual exclusivity among that group, but rather should also be read as "and/or" unless expressly stated otherwise. Furthermore, although items, elements or components of the invention may be described or claimed in the singular, the plural is contemplated to be within the scope thereof unless limitation to the singular is explicitly stated.

The presence of broadening words and phrases such as "one or more," "at least," "but not limited to" or other like phrases in some instances shall not be read to mean that the narrower case is intended or required in instances where such broadening phrases may be absent. The use of the term "module" does not imply that the components or functionality described or claimed as part of the module are all configured in a common package. Indeed, any or all of the various components of a module, whether control logic or other components, may be combined in a single package or separately maintained and may further be distributed across multiple locations.

Additionally, the various embodiments set forth herein are described in terms of exemplary block diagrams, flow charts and other illustrations. As will become apparent to one of ordinary skill in the art after reading this document, the illustrated embodiments and their various alternatives may be implemented without confinement to the illustrated examples. For example, block diagrams and their accompanying description should not be construed as mandating a particular architecture or configuration.

The previous description of the disclosed embodiments is provided to enable any person skilled in the art to make or use the present invention. Various modifications to these embodiments will be readily apparent to those skilled in the art, and the generic principles defined herein may be applied to other embodiments without departing from the spirit or scope of the invention. Thus, the present invention is not intended to be limited to the embodiments shown herein but is to be accorded the widest scope consistent with the principles and novel features disclosed herein.

## Claims

1. A computer implemented method to perform an approximate optimization for solving a global optimization task, comprising
receiving, by a quantum processor, data representing one or more global task objectives;
performing an optimization to cause transition of the global optimization task from a first Hamiltonian state towards a second Hamiltonian state;
identifying, through a machine learning model, an algorithm to obtain a solution to the global optimization task in the quantum domain,
wherein the identification is based on clustering equation/algorithm trained with predefined types of decision variables.

2. The method of claim 1, wherein the global optimization task is based on a combinatorial optimization problem.

3. The method of claim 1, wherein transition of the global optimization task from a first Hamiltonian state towards a second Hamiltonian state is performed by transforming the quantum processor from an initial state to a final state based on the computed model Hamiltonian and a selected set of variational parameters.

4. The method of claim 1, wherein the set of variational parameters is selected by the classical computer based on nearest neighbors be used to find the best fit suggestion for the given equations.

5. The method of claim 1, where the variational parameters are optimized to evaluate the solution using specified algorithm on respective hardware using optimization techniques

6. The method of claim 1, wherein a clustering algorithm is trained with a predefined set of decision variables from the equations to suggest algorithms to solve problems with different decision variables.

7. A system to perform an approximate optimization technique for a solving global optimization task, comprising:
a memory that stores computer executable components;
a processor that executes computer executable components stored in the memory, wherein the computer executable components comprise:
receiving, by a quantum processor, data representing one or more global task objectives;
performing an optimization technique to cause transition of the global optimization task from a first Hamiltonian state towards a second Hamiltonian state;
identifying, through a machine learning model, an equation/algorithm to obtain a solution to the global optimization task in the quantum domain,
wherein the identification is based on clustering equation/algorithm trained with predefined types of decision variables.

8. The system of claim 6, wherein the global optimization task is based on a combinatorial optimization problem.

9. The system of claim 6, wherein transition of the global optimization task from a first Hamiltonian state towards a second Hamiltonian state is performed by transforming the quantum processor from an initial state to a final state based on the computed model Hamiltonian and a selected set of variational parameters.

10. The system of claim 6, wherein the set of variational parameters is selected by the classical computer based on nearest neighbors be used to find the best fit suggestion for the given equations.

11. The method of claim 1, where the variational parameters are optimized to evaluate the solution using specified algorithm on respective hardware using optimization techniques

12. The system of claim 6, wherein a clustering algorithm is trained with a predefined set of decision variables from the equations to suggest algorithms to solve problems with different decision variables.

13. A computer program product to perform an approximate optimization for solving a global optimization task, the computer program product comprising a computer readable storage medium having program instructions embodied therewith, the program instructions are executable by a processor to cause the processor to:
receive, by a quantum processor, data representing one or more global task objectives;
perform an optimization to cause transition of the global optimization task from a first Hamiltonian state towards a second Hamiltonian state;
identify, through a machine learning model, an algorithm to obtain a solution to the global optimization task in the quantum domain,
wherein the identification is based on clustering equation/algorithm trained with predefined types of decision variables.
